**Europäisches Patentamt**

**European Patent Office**

**Office européen des brevets**

(11) Veröffentlichungsnummer: **0 163 983**
**B1**

(12) **EUROPÄISCHE PATENTSCHRIFT**

(45) Veröffentlichungstag der Patentschrift: **23.01.91**

(51) Int. Cl.⁵: **B 24 B 33/06**

(21) Anmeldenummer: **85105787.7**

(22) Anmeldetag: **10.05.85**

(54) **Verfahren zum Zustellen eines Honwerkzeuges und Vorrichtung zum Ausführen des Verfahrens.**

(30) Priorität: **07.06.84 DE 3421193**

(43) Veröffentlichungstag der Anmeldung:
**11.12.85 Patentblatt 85/50**

(45) Bekanntmachung des Hinweises auf die
Patenterteilung:
**23.01.91 Patentblatt 91/04**

(84) Benannte Vertragsstaaten:
**CH DE FR GB IT LI**

(56) Entgegenhaltungen:
DE-A-2 041 061   DE-A-2 831 681
DE-A-2 645 426   GB-A-2 070 475
DE-A-2 711 862   US-A-3 818 642

PATENT ABSTRACTS OF JAPAN, Band 5, Nr.
193 (M-101)865r, 9. Dezember 1981; & JP - A - 56
114 661 (FUJI HOONINGU KOGYO K.K.)
09.09.1981

VDI-ZEITSCHRIFT, Band 123, Nr. 15/16, August
1981, Seiten 661-671, Düsseldorf; U. KLINK
"Fachgebiete in Jahresübersichten: Honen"

(73) Patentinhaber: **Maschinenfabrik Gehring GmbH
& Co.
Gehringstrasse 28
D-7302 Ostfildern 2 (DE)**

(72) Erfinder: **Richter, Günter
Achalmstrasse 9
D-7312 Kirchheim-Nabern (DE)**
Erfinder: **Fröschle, Reinhard
Grabenäckerstrasse 17
D-7302 Ostfildern 1 (DE)**

(74) Vertreter: **Jackisch, Walter, Dipl.-Ing.
Patentanwalt W. Jackisch & Partner
Menzelstrasse 40
D-7000 Stuttgart 1 (DE)**

## Beschreibung

Die Erfindung betrifft ein Verfahren zum Zustellen eines Honwerkzeuges nach dem Oberbegriff des Anspruches 1 sowie eine Vorrichtung zur Durchführung des Verfahrens nach dem Oberbegriff des Anspruchs 17.

Ein derartiges Verfahren sowie eine derartige Vorrichtung sind aus der DE-A 28 31 681 bekannt. Das Honwerkzeug wird im Eilgang zugestellt, bis die Honsteine nahe dem Werkstück liegen, wonach auf eine langsamere Zerspanzustellgeschwindigkeit umgeschaltet wird. Für die Zustellvorrichtung des Honwerkzeuges ist ein einziger Motor vorgesehen, der sowohl die Eilzustellung als auch die langsamere Zerspanzustellung ausführt.

Die Umschaltung von der Eilzustellung auf die Zerspanzustellung erfolgt dabei nach Erfahrungswerten und den aktuellen Maßen der zu bearbeitenden Werkstückbohrung. Entsprechend der Werkzeugabnutzung ist dabei die Ausgangsstellung des Werkzeuges zu korrigieren.

Zur Senkung der Gesamtarbeitszeit beim Honen wurde auch schon vorgeschlagen (DE-A 20 41 061), die Umschaltung von Eilzustellung auf Zerspanzustellung erst dann auszuführen, wenn das Werkstück bereits an der zu bearbeitenden Bohrungswandung anliegt. Um diesen Zustand zu erkennen, mißt ein digitaler Fühler die Drehzahl der Zustellspindel, wobei der durch die Bremswirkung beim Anlegen der Honsteine an die Bohrungswand des Werkstückes hervorgerufene Drehzahlabfall des schnellaufenden Zustellmotors erkannt und der Motor außer Betrieb gesetzt wird. Für die Zerspanzustellung wird dann ein zweiter Motor in Betrieb genommen. Durch das infolge Massenträgheit gegebene Nachlaufen des schnellaufenden Motors nach dem Abschalten würden die Honsteine mit großer Kraft angedrückt, weshalb als Pufferglied ein federndes Verbindungsglied zwischen dem Motor und der Zustellspindel angeordnet ist. Diese Anordnung soll einen Bruch der Honsteine und eine Beschädigung der Werkstücke sicher verhindern, was jedoch nur unzureichend gelingt; insbesondere bei Honwerkzeugen kleineren Durchmessers kommt es immer wieder zu einer schädlichen Überbeanspruchung, da die Drehzahl der Zustellspindel erst abfällt, nachdem die Honsteine bereits mit erheblicher Kraft gegen die Bohrungswand des Werkstückes gedrückt wurden. Dies ist im wesentlichen darin begründet, daß bei der Übertragung der Zustellbewegung erhebliche Reibungskräfte überwunden werden müssen und insbesondere durch die große Übersetzung der axialen Zustellbewegung in eine radiale Bewegung der Honsteine über ein Keilgetriebe bei relativ geringen Axialkräften große radiale Zustellkräfte entstehen, die ein feinfühliges Anschneiden der Honsteine verhindern.

Der vorliegenden Erfindung liegt die Aufgabe zugrunde, ein Verfahren nach dem Oberbegriff des Anspruches 1 derart weiterzubilden, daß auf sehr einfache und zuverlässige Weise auch bei sehr kleinen Hondurchmessern eine Überbeanspruchung von Werkzeug und/oder Werkstück ausgeschlossen und ein weiches Anschneiden der Honsteine gewährleistet ist sowie eine Vorrichtung zur Durchführung des Verfahrens anzugeben.

Diese Aufgabe wird erfindungsgemäß durch das Verfahren nach Anspruch 1 gelöst. Eine Vorrichtung zur Durchführung des Verfahrens ist in Anspruch 17 angegeben.

Nach dem Einfahren des Werkzeuges in die zu bearbeitende Werkstückbohrung startet der Zustellmotor mit hoher Drehzahl und niedrigem Drehmoment. Beim Anlegen der Honsteine an der Bohrungswand wird ein voreingestelltes Grenzdrehmoment der Drehmomentbegrenzung erreicht bzw. überschritten und der Antrieb bleibt stehen. Dies wird z.B. von einem Drehimpulsgeber erkannt, worauf sofort die automatische Umschaltung auf die Zerspanzustellung erfolgt, bei der der Motor vorteilhaft auf ein voreingestelltes höheres Arbeitsdrehmoment und eine voreingestellte niedrige Drehzahl umgeschaltet wird, so daß die Zustellung nun mit langsamer Geschwindigkeit (Zerspanzustellgeschwindigkeit) bei höherem Drehmoment fortgesetzt wird.

In vorteilhafter Weiterbildung der Erfindung ist die Steuerung so ausgebildet, daß nach dem Einfahren des Honwerkzeuges in die Werkstückbohrung die Hubbewegung der Honspindel unterbrochen wird, solange die Honsteine im Eilgang zugestellt werden. Nach dem Anlegen der Honsteine an die Bohrungswand und dem Abschalten des Motors wird dessen Drehrichtung kurzzeitig geändert und die Honsteine um einen vorbestimmten kleinen Betrag zurückgestellt. Danach startet die Arbeitshubbewegung sowie die Spindeldrehung und gleichzeitig wird der Zustellmotor auf Zerspanzustellgeschwindigkeit umgeschaltet.

Durch die geringe Rückstellung der Honsteine wird das Zustellsystem entspannt, und es wird ein besonders schonendes Anschneiden der Honsteine möglich. Dadurch wird auch bei kleinen Bohrungsdurchmessern ein störungsfreier Bearbeitungsablauf gewährleistet und Schäden durch Werkzeugbrüche sicher vermieden.

Es zeigen

Fig. 1 den Aufbau der erfindungsgemäßen Vorrichtung in schematischer Darstellung,

Fig. 2 bis 5 als Blockschaltbild und teils als Schemazeichnung ausgeführte Abbildungen der Vorrichtung nach Fig. 1 in verschiedener Ausführung.

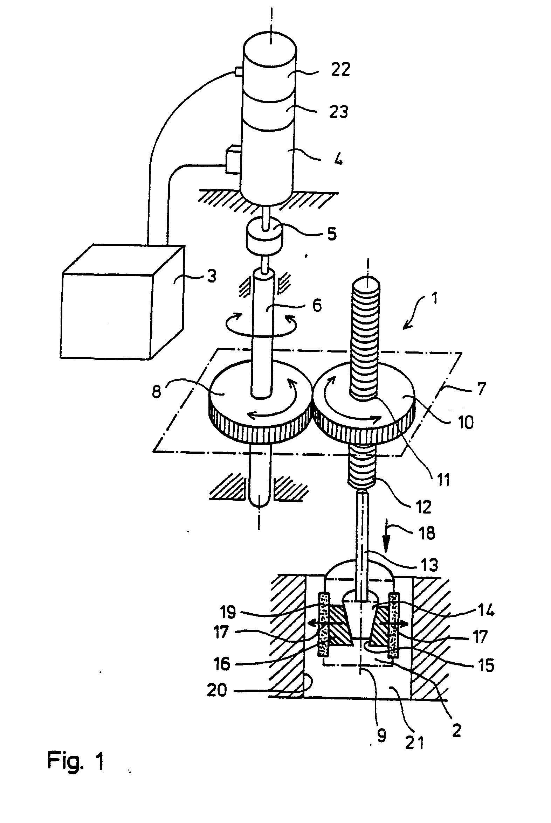

In Fig. 1 ist eine Vorrichtung 1 zum Antrieb und zur Steuerung der Zustellung eines Honwerkzeuges 2 einer nicht weiter dargestellten Honmaschine schematisch dargestellt.

Honmaschinen und Honwerkzeuge sind bekannt und brauchen daher an dieser Stelle nicht in Einzelheiten erläutert werden.

Die Vorrichtung 1 besteht im wesentlichen aus einer Steuer- und Regeleinheit 3, die mit einem ortsfest angeordneten Gleichstrommotor 4 verbunden ist, der über eine Kupplung 5 eine Polygonwelle 6 antreibt. Die Lage des Gleichstrommotors 4 wird über einen Drehimpulsgeber 22 kontrolliert und die Drehzahl mittels eines Tachogenerators 23 nachgeregelt. Die Polygonwelle 6 bildet die Antriebswelle für ein zusammen mit dem Honwerkzeug 2 in bekannter Weise axial auf- und abbewegbares Zustellgetriebe 7. Das Antriebszahnrad 8 des Zustellgetriebes 7, welches hierzu axial verschiebbar aber drehfest auf der Polygonwelle 6 sitzt, kämmt mit einem koaxial zur Werkzeugachse 9 angeordneten Gegenrad 10. Dieses weist eine konzentrische Gewindebohrung 11 auf, in der fluchtend zur Werkzeugachse 9 eine Gewindespindel 12 aufgenommen ist.

Die Gewindespindel 12 ist durch nicht näher gezeigte Mittel gegen Verdrehen gesichert und führt bei einer Drehung des Gegenrades 10 eine der Gewindesteigung entsprechende axiale Bewegung aus, die direkt auf die Zustellstange 13 des Honwerkzeuges 2 übertragen wird.

Bei einer axialen Abwärtsbewegung (Pfeil 18) der Zustellstange 13 schiebt in bekannter Weise der mit der Zustellstange einstückig ausgebildete Kegelstumpf 14 die mit entgegengerichteten Keilflächen 15 versehenen Honsteinträger 16 radial nach außen (Pfeil 17), womit die Honsteine 19 gegen die Bohrungswand 20 einer Werkstückbohrung 21 zugestellt und angedrückt werden.

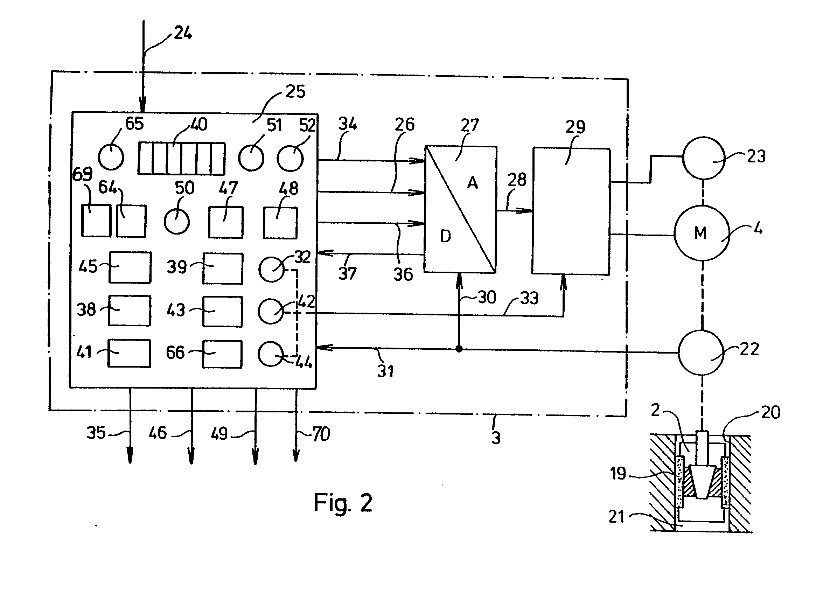

Die Fig. 2 bis 5 zeigen Blockschaltbilder der vorstehend beschriebenen Zustellvorrichtungen in verschiedener Ausführung in Verbindung mit der allgemeinen Maschinensteuerung. Dabei soll anhand der nachstehenden Ablaufbeschreibung die Funktionsweise erläutert und die einzelnen Elemente der Steuer- und Regeleinheit 3 verdeutlicht werden.

Nach der Starteinleitung durch eine nicht dargestellte allgemeine Maschinensteuerung wird das Honwerkzeug 2 in die Werkstückbohrung 21 eingefahren und die Hubbewegung gestoppt. Jetzt erhält die Zustellsteuerung 25 über ein Signal 24 den Befehl "Zustellung starten". Darauf gibt diese über ein Signal 26 in schneller Folge Impulse an den Speicher eines Lagekreisreglers 27, wodurch an dessen Ausgang eine analoge Spannung erscheint, die über eine Verbindung 28 an einen Leistungsteil 29 gegeben wird, welcher den Motor 4 ansteuert. Der Motor 4 beginnt jetzt schnell zu drehen und die Honsteine 19 stellen im Eilgang zu, wie vorstehend beschrieben ist.

Hierbei ist dem Motor 4 vom Leistungsteil 29 ein bestimmtes maximales Drehmoment vorgegeben. Dieses im weiteren als Anlegemoment bezeichnete Grenzdrehmoment kann über ein der Zustellsteuerung 25 zugeordnetes Eingabeglied 32 eingestellt und über ein Signal 33 in den Leistungsteil 29 eingegeben werden.

Der in bekannter Weise mit dem Motor 4 verbundene Drehimpulsgeber 22 gibt zu jeder Motor-Umdrehung eine bestimmte Anzahl von Impulsen ab, die über ein Signal 30 an den Lagekreisregler 27 und gleichzeitig über ein Signal 31 an die Zustellsteuerung 25 gegeben werden.

Sobald sich die Honsteine an die Bohrungswand des Werkstückes anlegen und das voreingestellte Anlegemoment erreicht wird, bleibt der Motor 4 stehen und der Drehimpulsgeber 22 gibt keine Impulse mehr ab. Dies erkennt die Zustellsteuerung 25, löscht das an den Lagekreisregler 27 gegebene Signal 26 und setzt über ein "Reset"-Signal 34 den Speicher des Lagekreisreglers 27 auf Null; die Spannung am Ausgang 28 des Lagekreisreglers 27 wird Null. Sofort anschließend gibt die Zustellsteuerung 25 wieder in schneller Folge Impulse mit Signal 36 (Motor rückwärts) in den Speicher des Lagekreisreglers 27 ein und an dessen Ausgang steht jetzt eine negative Spannung an, die über den Leistungsteil 29 den Motor 4 veranlaßt, sich in entgegengesetzter Richtung zu drehen. Die Drehung des Motors 4 wird wieder vom Drehimpulsgeber 22 in Impulse umgesetzt, die über Signal 31 an die Zustellsteuerung 25 gegeben werden.

Bei Erreichen der vorher von der Zustellsteuerung 25 vorbestimmten Anzahl von Impulsen löscht diese das Signal 36 und gibt gleichzeitig das "Reset"-Signal 34 an den Lagekreisregler 27, worauf der Motor 4 erneut stehen bleibt.

Durch die kurzzeitige Drehung des Motors 4 in entgegengesetzter Richtung ist das gesamte Zustellsystem um einen kleinen Betrag rückgestellt, wonach die Honsteine 19 an der Bohrungswand 20 noch anliegen, das gesamte Zustellsystem jedoch mechanisch entspannt ist. Der Betrag der Rückstellung wird erfindungsgemäß von der Zustellsteuerung 25 in Abhängigkeit von vorgebbaren Werkzeugkennwerten automatisch errechnet oder kann über ein Eingabeglied 38 eingegeben werden.

Die Zustellsteuerung 25 erkennt jetzt "Honsteine angelegt" und gibt ein Signal 35 an die allgemeine Maschinensteuerung, die das Einschalten der Arbeitshubbewegung und der Spindeldrehung bewirkt. Gleichzeitig wird die Zerspanzustellung eingeleitet und die Zustellsteuerung 25 gibt hierzu erfindungsgemäß nacheinander mit Signal 26 nur jeweils einen Impuls in den Lagekreisregler 27 ein, d.h. der Lagekreisregler muß leer sein, bevor der nächste Impuls eingegeben wird. Dies wird dadurch erreicht, daß die auf den ersten Impuls einsetzende Drehung des Motors 4 einen Impuls des Drehimpulsgebers 22 auslöst, der über Signal 30 den Speicher des Lagekreisreglers 27 löscht, wodurch der Motor 4 sofort wieder stillsteht. Über Signal 37 wird der Zustellsteuerung 25 "Lagekreisregler = 0" gemeldet, worauf diese den nächsten Impuls freigibt und der vorbeschriebene Vorgang wiederholt sich.

Der Motor 4 dreht also bei jedem Impuls um einen Winkelschritt weiter, d.h. der Motor 4 arbeitet jetzt ähnlich wie ein Schrittmotor.

Durch die zeitliche Folge der Impulse (Signal 26), die an einem Eingabeglied 39 der Zustellsteuerung 25 eingebbar ist, wird die Zustellgeschwindigkeit bestimmt.

Gleichzeitig mit dem Einschalten der Zerspanzustellung wird dem Motor vom Leistungsteil 29 ein anderes Grenzdrehmoment, z.B. ein höheres, das im weiteren als Zerspanmoment bezeichnet wird, vorgegeben.

Dieses Zerspanmoment kann über ein der Zustellsteuerung 25 zugeordnetes Eingabeglied 42 eingestellt und über ein Signal 33 in den Leistungsteil 29 eingegeben werden.

Ferner können erfindungsgemäß noch weitere Eingabeglieder für die Vorgabe verschiedener Zustellgeschwindigkeiten und Zerspanmomente vorgesehen sein, um entsprechend der jeweiligen Bearbeitungsaufgabe optimale Zerspanbedingungen zu erreichen, die kurze Bearbeitungszeiten und hohe Präzision gewährleisten.

So ist in den gezeigten Ausführungsbeispielen der Zustellsteuerung 25 über ein Eingabeglied 43 eine zweite Zustellgeschwindigkeit und über ein Eingabeglied 44 ein zweites Zerspanmoment eingebbar. Die Umschaltung der Zustellung auf diese Werte und die Abschaltung der Zustellung bei Erreichen des Fertigmaßes erfolgt entweder nach an weiteren Eingabegliedern vorgewählten Werten oder nach Maßgabe einer Meßeinrichtung in Abhängigkeit von der Zerspanung, wie nachfolgend im einzelnen noch näher erläutert ist.

Sobald das Fertigmaß erreicht ist, gibt die Zustellsteuerung 25 keinen Impuls mehr in den Lagekreisregler 27 ein und der Motor 4 bleibt stehen, diese Stellung wird als "Fertigmaß" in der Zustellsteuerung erkannt und gespeichert. Ferner gibt die Zustellsteuerung 25 mit Signal 46 an die allgemeine Maschinensteuerung "Fertigmaß erreicht", das diese in bekannter Weise verarbeitet und das Signal 24 (Start) zurücknimmt. Sofort anschließend gibt die Zustellsteuerung 25 wieder in schneller Folge Impulse mit Signal 36 (Motor rückwärts) in den Speicher des Lagekreisreglers 27 ein und an dessen Ausgang steht wieder eine negative Spannung an, die über den Leistungsteil 29 den Motor 4 veranlaßt, sich in entgegengesetzter Richtung zu drehen, wodurch die Zustellung zurückgestellt wird. Die Drehzahl des Motors 4 wird wieder vom Drehimpulsgeber 22 in Impulse umgesetzt, die über Signal 31 an die Zustellsteuerung 25 gegeben werden. Bei Erreichen der vorher von der Zustellsteuerung 25 vorbestimmten Anzahl von Impulsen löscht diese das Signal 36 und gibt gleichzeitig das "Reset"-Signal 34 an den Lagekreisregler und der Motor 4 bleibt erneut stehen.

Die Größe der Rückstellung ist an einem Eingabeglied 41 einstellbar und wird vorzugsweise so gewählt, daß sie der Zerspanzugabe der Werkstücke zuzüglich eines Sicherheitsabstandes entspricht. Mit der Rückstellung der Honsteine ist der Honvorgang beendet und der vorbeschriebene Ablauf beginnt in dieser Stellung für das nächste Werkstück.

Die vorbeschriebene Zustellvorrichtung ist, nach einem weiteren Merkmal der Erfindung, vorzugsweise so ausgeführt, daß die vorzubestimmenden Zerspanwerte an den Eingabegliedern direkt in μm bzw. in μm/sec, bezogen auf den Werkstückdurchmesser, eingegeben werden können. Zu diesem Zweck ist die Zustellsteuerung 25 mit einem weiteren Eingabeglied 64 ausgerüstet, an dem die vom jeweils eingesetzten Honwerkzeug in Abhängigkeit vom Kegelwinkel 14, 15 vorbestimmte Zerspanung in μm pro Zustellschritt eingebbar ist.

Mit der Eingabe dieses Wertes rechnet die Zustellsteuerung 25 alle weiteren Werteingaben in μm bzw. in μm/sec, bezogen auf den Werkstückdurchmesser, automatisch um.

Ferner ist die Zustellvorrichtung 25 erfindungsgemäß mit einer Anzeige 40 versehen, an der die Zustellschritte oder wählbar mittels eines Schalters 65 die Zerspanung in μm, bezogen auf den Werkstückdurchmesser, angezeigt wird.

Des weiteren ist die Zustellsteuerung 25 mit einem Eingabeglied 69 versehen, an dem entsprechend der vorgegebenen Schleifmitteldicke der maximal mögliche Gesamtverschleiß des Honwerkzeuges eingebbar ist.

Die Zustellsteuerung 25 erkennt, wenn der eingegebene Wert erreicht ist und gibt an die allgemeine Maschinensteuerung ein Signal 70 "Werkzeug wechseln".

Fig. 2 zeigt eine erfindungsgemäße Vorrichtung, bei der das Fertigmaß der Werkstückbohrung ohne zusätzliche Meßeinrichtung indirekt über den Zustellweg gesteuert wird. Hierzu weist die Vorrichtung ein Eingabeglied 45 auf, an dem entsprechend der Bearbeitungszugabe des ersten Werkstückes die erforderliche Zerspanung einstellbar ist. Dieser Wert bestimmt nach dem ersten "Anlegen" der Honsteine die Zerspanung, d.h. bei Erreichen dieses Wertes wird die Zustellung gestoppt und das "Fertigmaß" in der Zustellsteuerung 25 gespeichert und in der Anzeige 40 angezeigt. Bei allen nachfolgenden Werkstücken fährt die Zustellvorrichtung unabhängig vom "Anlegewert" bis zu dem in der Zustellsteuerung 25 gespeicherten Fertigmaß. Der im Verlauf der Bearbeitung vieler Werkstücke naturgemäß auftretende Honsteinverschleiß wird automatisch berücksichtigt. Dazu ist der Zustellsteuerung 25 ein Werkstückzähler 48 und ein Verschleißwert-Eingabeglied 47 zugeordnet. Sobald die am Werkstückzähler 48 eingestellte Anzahl von Werkstükken bearbeitet ist, wird zu dem gespeicherten Fertigmaß der am Eingabeglied 47 voreingestellte Verschleißwert addiert und als "neues" Fertigmaß in der Zustellsteuerung 25 gespeichert.

Das gespeicherte Fertigmaß ist außerdem erfindungsgemäß mittels Eingabegliedern, z.B. Taster 51 und 52, manuell veränderbar. Die Anordnung kann so getroffen sein, daß das Fertigmaß bei jeder Betätigung des Tasters 51 um einen vorbestimmten Betrag größer und bei Betätigung des Tasters 52 um einen vorbestimmten Betrag kleiner wird. Damit können ggf., insbesondere bei den ersten Werkstücken, auftretende Maßfehler auf einfache Weise korrgiert werden.

Bei vielen Bearbeitungsfällen kann es sehr vorteilhaft sein, die Zerspanung ab einem vorbestimmten Wert mit einer anderen Zerspangeschwindigkeit fortzusetzen, um beispielsweise eine an sich bekannte, sogenannte "progressive" oder "degressive" Zustellung zu erhalten.

Zu diesem Zweck enthält die Zustellsteuerung 25 (Fig. 2) nach einer weiteren Ausbildung der Erfindung ein zusätzliches Eingabeglied 66 für die Vorgabe einer Teilzerspanung. Diese kann über einen Schalter 50 wahlweise der ersten Zustellgeschwindigkeit (Eingabeglied 39) oder der zweiten Zustellgeschwindigkeit (Eingabeglied 43) zugeordnet sein.

Im ersten Fall wird der am Eingabeglied 66 eingegebene Zerspanwert ab dem Anlegen der Honsteine gerechnet, d.h. sobald nach dem Anlegen der Honsteine dieser Wert erreicht ist, gibt die Zustellsteuerung 25 ein Signal 49 an die allgemeine Maschinensteuerung, welche je nach Bearbeitungsfall in bekannter Weise eine Veränderung der Spindeldrehzahl, der Hubgeschwindigkeit, der Werkstückspannkräfte u.a.m. bewirken kann. Gleichzeitig schaltet die Zustellsteuerung 25 auf die zweite Zustellgeschwindigkeit (Eingabeglied 43) und auf das zweite Zerspanmoment (Eingabeglied 44) um und die Bearbeitung wird mit einer anderen, vorzugsweise höheren, Zerspangeschwindigkeit (progressive Zustellung) fortgesetzt.

Ist die am Eingabeglied 66 vorgegebene Teilzerspanung mittels des Wahlschalters 50 der zweiten Zustellgeschwindigkeit zugeordnet, so wird dieser Wert vom Fertigmaß aus zurückgerechnet, d.h. um diesen vorgegebenen Wert vor Erreichen des Fertigmaßes gibt die Zustellsteuerung 25 das Signal 49 an die allgemeine Maschinensteuerung und schaltet auf die zweite Zustellgeschwindigkeit und auf das zweite Zerspanmoment um. Die Bearbeitung wird jetzt mit einer anderen, vorzugsweise geringeren, Zerspangeschwindigkeit (degressive Zustellung) fortgesetzt, bis das Fertigmaß erreicht ist.

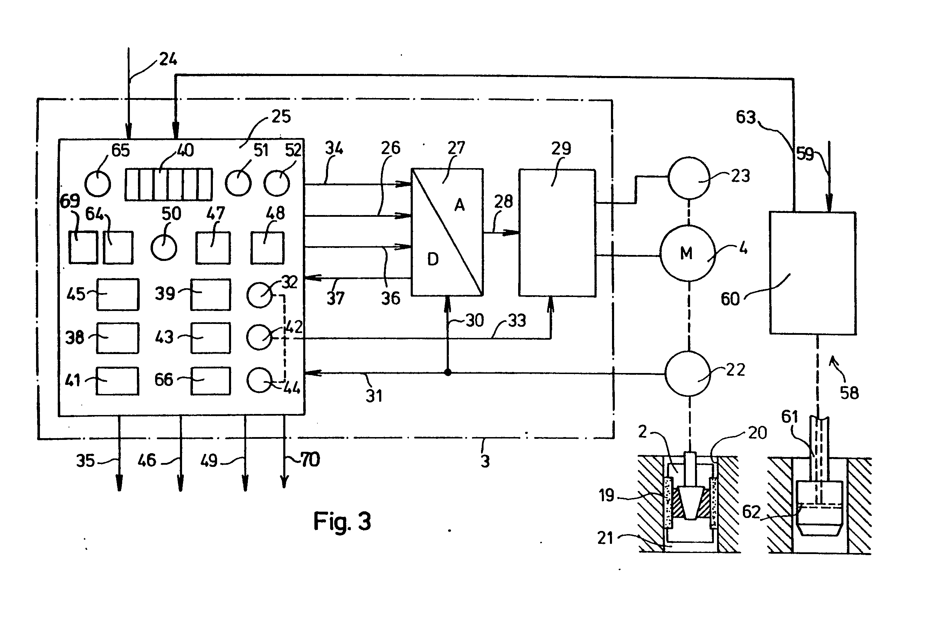

Für sehr hohe Anforderungen an die Maßgenauigkeit, insbesondere bei Werkstückbohrungen von kleinem Durchmesser, eignet sich das Ausführungsbeispiel nach Fig. 3, das in Verbindung mit einer Nachmeßeinrichtung 58 arbeitet.

Auch hier erhält zu Beginn des Honvorgangs, sobald das Honwerkzeug 2 in die Bohrung des Werkstückes 21 eingefahren und die Hubbewegung gestoppt ist, die Zustellsteuerung 25 über ein Signal 24 von der allgemeinen Maschinensteuerung den Befehl "Zustellung starten", und der Honvorgang erfolgt zunächst in der vorher beschriebenen Weise. Ist die am Eingabeglied 45 vorgegebene Zerspanung erreicht, wird die Zustellung gestoppt und das "Fertigmaß" in der Zustellsteuerung 25 gespeichert. Sofort anschließend wird die Zustellung zurückgestellt und der Honvorgang ist beendet. Das Honwerkzeug 2 fährt heraus, worauf über ein Signal 59 von der allgemeinen Maschinensteuerung der Nachmeßvorgang ausgelöst wird.

Die schematisch in Fig. 3 dargestellte Nachmeßeinrichtung 58 besteht im wesentlichen aus einem an sich bekannten, beispielsweise pneumatischen/elektrischen Meßgerät 60 mit einem daran angeschlossenen Meßdorn 61, der mit Meßdüsen 62 ausgestattet ist und zum Messen durch geeignete Mittel automatisch in die Werkstückbohrung 21 eingefahren wird.

Die Anordnung kann dabei so getroffen sein, daß der Meßdorn 61 von unten in das noch aufgespannte Werkstück einfährt, so daß eine gesonderte Meßstation entbehrlich ist. Erfindungsgemäß kann das Werkstück auch durch eine geeignete Fördereinrichtung, beispielsweise einen Rundschalttisch, zu einer Nachmeßstation gebracht und dort vermessen werden. Diese Möglichkeit besitzt den Vorteil, daß während des Meßvorgangs bereits ein neuer Honvorgang beginnen kann, so daß zusätzliche Nebenzeiten entfallen.

Der gemessene Wert wird im Meßgerät 60 mit dem gewünschten Werkstückfertigmaß verglichen und die Abweichung mit Signal 63 an die Zustellsteuerung 25 gegeben und dort mit dem entsprechenden Vorzeichen zu dem gespeicherten Fertigmaß addiert und als "neues" Fertigmaß für das nächste Werkstück gespeichert.

Dieser Vorgang wiederholt sich bei jedem Werkstück, d.h. auftretende Maßabweichungen, z.B. durch Honsteinverschleiß, werden von der Meßeinrichtung sofort erkannt und von der Zustellsteuerung kompensiert, wodurch die Toleranz in sehr engen Grenzen gehalten wird.

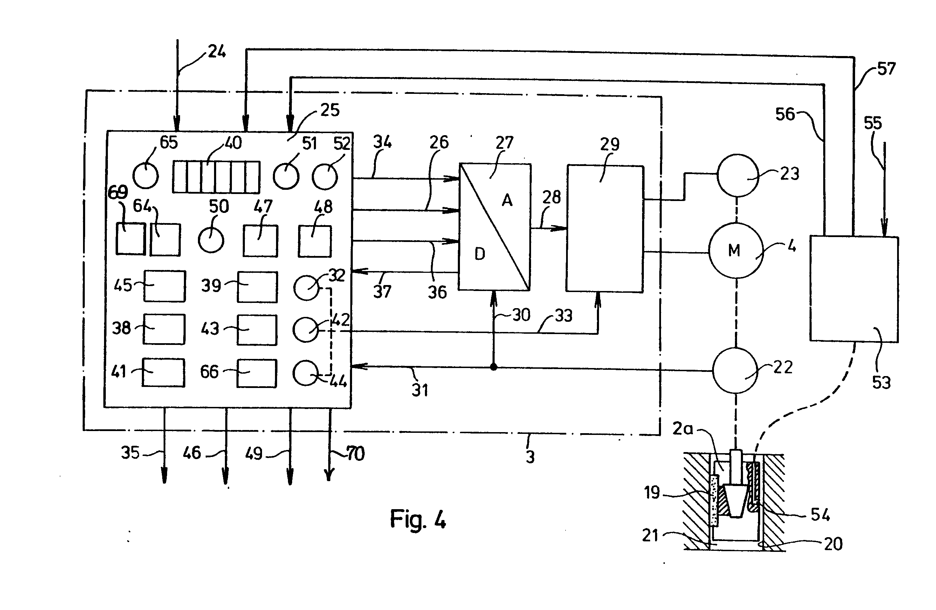

Bei einer Einrichtung nach Fig. 4 wird das Fertigmaß der Werkstückbohrung durch eine geeignete Meßeinrichtung, beispielsweise eine pneumatische Meßeinrichtung 53, gesteuert, die in bekannter Weise über ein mit Meßdüsen 54 ausgestattetes Honwerkzeug 2a während der Bearbeitung den Durchmesser der Werkstückbohrung mißt. Durch ein Signal 55 von der allgemeinen Maschinensteuerung wird die Meßeinrichtung zu Beginn des Honvorgangs eingeschaltet. Wird im Verlauf der Bearbeitung das Fertigmaß erreicht, so gibt die Meßeinrichtung 53 mit Signal 56 "Fertigmaß erreicht" an die Zustellsteuerung 25, die daraufhin die Zustellung stoppt und die Beendigung des Honvorgangs in der vorstehend beschriebenen Weise auslöst.

Ferner kann auch die Umschaltung während der Bearbeitung auf andere Bearbeitungsparameter von der Meßeinrichtung 53 gesteuert sein. Bei Erreichen eines vorbestimmten Werkstückdurchmessers, der in bekannter Weise eingebbar ist, gibt die Meßeinrichtung ein Signal 57 an die Zustellsteuerung 25, welche daraufhin sofort auf eine zweite Zustellgeschwindigkeit und auf ein zweites Zerspanmoment umschaltet. Gleichzeitig wird mit Signal 49 von der Zustellsteuerung 25 die allgemeine Maschinensteuerung veranlaßt, Spindeldrehung, Hubgeschwindigkeit, Werkstückspannkräfte u.a.m. in bekannter Weise nach vorbestimmten Werten zu verändern.

Ansonsten entspricht der Arbeitsablauf der zuerst beschriebenen Einrichtung, so daß auf eine ausführliche Funktionsbeschreibung verzichtet werden kann.

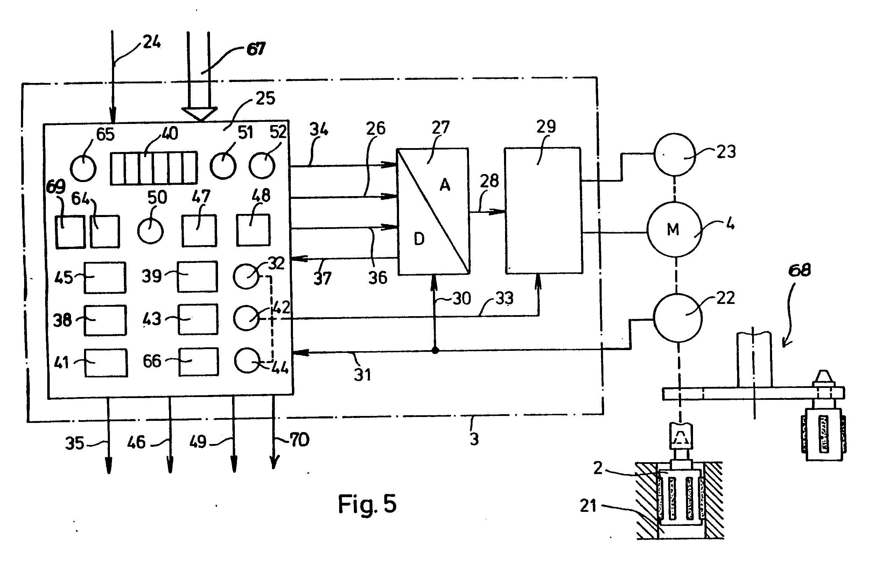

Die erfindungsgemäße Einrichtung kann ferner, wie in Fig. 5 schematisch dargestellt ist, für eine an sich bekannte Fernansteuerung 67 vorgesehen sein. Über die Fernansteuerung 67 können alle der Zustellsteuerung 25 zugeordneten Eingabeglieder von der allgemeinen Maschinensteuerung aus übertragen werden.

Damit ist es nach einer besonders vorteilhaften Ausgestaltung der Erfindung über die Fernansteuerung 67 möglich, automatisch neue Einstellwerte, z.B. nach einem Werkzeugwechsel, in die Zustellsteuerung 25 einzugeben, insbesondere bei Maschinen mit Werkzeugspeicher 68 und automatischem Werkzeugwechsel. Hierzu sind in der allgemeinen Maschinensteuerung alle den verschiedenen Werkzeugen im Werkzeugspeicher 68 zugehörigen Einstelldaten in bekannter Weise gespeichert. Diese Daten werden nacheinander, entsprechend dem Arbeitseinsatz der Werkzeuge, über die Fernansteuerung 67 in die Zustellsteuerung 25 übertragen.

**Patentansprüche**

1. Verfahren zum automatischen Zustellen eines Honwerkzeuges zum Bearbeiten von Werkstückbohrungen, wobei zunächst im Eilgang zugestellt wird und dann auf eine langsamere Zerspanzustellung umgeschaltet wird, wobei die Eilzustellung und die Zerspanzustellung durch einen gemeinsamen Motor (4) erfolgen und die Zustellgeschwindigkeit der Eilzustellung und die der Zerspanzustellung voreingestellt werden, dadurch gekennzeichnet, daß eine jeweilige Drehmomentbegrenzung des Motors voreingestellt wird und gegen Ende der Eilzustellung beim Anlegen der Honsteine an die Bohrungswand die Drehmomentbegrenzung anspricht, worauf die Umschaltung von der Eilzustellung auf die Zerspanzustellung erfolgt.

2. Verfahren nach Anspruch 1, dadurch gekennzeichnet, daß nach dem Einfahren des Honwerkzeuges (2) in die Werkstückbohrung (21) die Honsteine (19) über an sich bekannte Zustellelemente (5, 6, 7, 14, 15) im Eilgang zugestellt werden und der Motor (4) dabei mit hoher Drehzahl und niedrigem Drehmoment entsprechend der Voreinstellung läuft.

3. Verfahren nach Anspruch 2, dadurch gekennzeichnet, daß nach dem Einfahren des Honwerkzeuges (2) in die Werkstückbohrung (21) die Hubbewegung unterbrochen wird, solange die Honsteine (19) im Eilgang zugestellt werden.

4. Verfahren nach Anspruch 2 oder 3, dadurch gekennzeichnet, daß beim Anlegen der Honsteine (19) an die Bohrungswand (20) der Werkstückbohrung (21) und bei Erreichen des voreingestellten Grenzdrehmomentes der Motor (4) abgeschaltet wird.

5. Verfahren nach Anspruch 4, dadurch gekennzeichnet, daß nach dem Anlegen der Honsteine (19) an die Bohrungswand (20) und dem Abschalten des Motors (4) dessen Drehrichtung kurzzeitig geändert wird und die Honsteine (19) um einen voreingestellten Betrag zurückgestellt werden, der vorzugsweise so gewählt wird, daß die Honsteine (19) an der Bohrungswand (20) noch anliegen, jedoch das gesamte Zustellsystem mechanisch entspannt ist.

6. Verfahren nach Anspruch 5 dadurch gekennzeichnet, daß der Betrag der Rückstellung in Abhängigkeit von den vorgebbaren Werkzeugkennwerten automatisch errechnet wird oder über ein Eingabeglied (38) voreingegeben wird.

7. Verfahren nach einem der Ansprüche 5 oder 6, dadurch gekennzeichnet, daß nach der im Anschluß an die Eilzustellung erfolgten Rückstellung der Honsteine (19) automatisch die Hubbewegung, die Werkzeugdrehung und die Zerspanzustellung, die gemäß der Voreinstellung vorzugsweise mit geringer Zustellgeschwindigkeit und hohem Grenzdrehmoment arbeitet, eingeschaltet wird.

8. Verfahren nach einem der Ansprüche 1 bis 7, dadurch gekennzeichnet, daß bei Erreichen eines vorab eingegebenen Wertes, dem Fertigmaß, die Zerspanzustellung gestoppt wird und der Motor (4) kurzzeitig in entgegengesetzter Richtung dreht und die Zustellung um einen voreingestellten Betrag zurückgestellt wird.

9. Verfahren nach Anspruch 8, dadurch gekennzeichnet, daß an einem Eingabeglied (45) eine dem ersten von mehreren in einer Serie zu bearbeitenden Werkstücken entsprechend der Bearbeitungszugabe erforderliche Zerspanzustellung eingegeben wird, und daß bei Erreichen dieses Wertes die Zerspanzustellung gestoppt wird und diese Stellung als "Fertigmaß" in einer Zustellsteuerung (25) gespeichert wird.

10. Verfahren nach Anspruch 9, dadurch gekennzeichnet, daß an einem Eingabeglied (47) der Zustellsteuerung (25) ein vorher ermittelter, auf ein bearbeitetes Werkstück bezogener Honsteinverschleißwert eingegeben wird, und daß in der Zustellsteuerung (25) dieser Wert zum Fertigmaß addiert und als neues Fertigmaß gespeichert wird.

11. Verfahren nach einem der Ansprüche 1 bis 10, dadurch gekennzeichnet, daß an einem Eingabeglied (66) ein Zwischenwert eingegeben wird, der zwischen dem unbearbeiteten Maß und dem Fertigmaß liegt, und daß von der Zustellsteuerung (25) bei Erreichen dieses Wertes auf eine andere Zustellgeschwindigkeit und/oder auf ein anderes Zerspanmoment umgeschaltet wird, und daß gleichzeitig Hubgeschwindigkeit, Werkzeugdrehzahl und die Werkstückspannkräfte automatisch mit änderbar sind.

12. Verfahren nach einem der Ansprüche 8 bis 11, dadurch gekennzeichnet, daß der von einer Nachmeßeinrichtung (58) gemessene Wert der Werkstückbohrung (21) mit dem gewünschten Fertigmaß der Werkstückbohrung (21) verglichen wird und die Abweichung zu dem in der Zustellsteuerung (25) gespeicherten Fertigmaß addiert und als "neues" Fertigmaß gespeichert wird.

13. Verfahren nach einem der Ansprüche 8 bis 12, dadurch gekennzeichnet, daß das Maß der Bohrung während der Bearbeitung mit Hilfe einer Meßeinrichtung (53) erfaßt wird, und daß dieser Wert in der Zustellsteuerung mit dem Wert des Fertigmaßes verglichen wird, und daß bei Erreichen des Fertigmaßes der Bearbeitungsprozeß beendet wird.

14. Verfahren nach Anspruch 13, dadurch gekennzeichnet, daß die Umschaltung während der Zerspanzustellung auf eine andere Zustellgeschwindigkeit und/oder auf ein anderes Zerspanmoment von der Zustellsteuerung (25) in Abhängigkeit von den Meßsignalen der Meßeinrichtung (53) gesteuert wird.

15. Verfahren nach Anspruch 14, dadurch gekennzeichnet, daß die Eingabeglieder der Zustellsteuerung (25) über eine automatische Fernansteuerung (67) betätigt werden, und daß über die Fernansteuerung (67) automatisch die verschiedenen Werkzeugen zugeordneten Einstelldaten nacheinander entsprechend dem Arbeitseinsatz der Werkzeuge in die Zustellsteuerung (25) übertragen werden.

16. Verfahren nach einem der Ansprüche 1 bis 15, dadurch gekennzeichnet, daß die Steuerung mittels Impulsen erfolgt, und daß für die Zerspanzustellung nacheinander nur jeweils ein Impuls in einen Lagekreisregler (27) eingegeben und so verwertet wird, daß der Motor (4) bei jedem Impuls um einen vorbestimmten Winkelschritt weitergedreht wird und quasi als Schrittmotor arbeitet.

17. Vorrichtung zur Durchführung des Verfahrens nach einem der Ansprüche 1 bis 16, mit einer Zustellvorrichtung für ein Honwerkzeug zum Bearbeiten von Werkstückbohrungen mit einer Eilzustellung und einer langsameren Zerspanzustellung, wobei für die Eil- und Zerspanzustellung ein gemeinsamer Motor (4) vorgesehen ist, dem eine voreinstellbare Steuereinrichtung (3) für die Zustellgeschwindigkeiten vorgeschaltet ist,

dadurch gekennzeichnet, daß über die Steuereinrichtung (3) ein jeweiliges Drehmoment für die Eil- und Zerspanzustellung einstellbar ist und die Steuereinrichtung (3) eine Zustellsteuerung (25) zur Umschaltung von Eilzustellung auf Zerspanzustellung aufweist.

18. Vorrichtung nach Anspruch 17, dadurch gekennzeichnet, daß die Steuereinrichtung (3) ferner einen Lagekreisregler (27) und einen Motor-Leistungs-Regler (29) aufweist, und daß der Lagekreisregler (27) vorzugsweise ein Digital- Analog-Wandler ist, der zwischen Zustellsteuerung (25) und Motor-Leistungs-Regler (29) geschaltet ist.

19. Vorrichtung nach Anspruch 18, dadurch gekennzeichnet, daß der Motor (4) ein Gleichstrommotor ist, dessen Lage über einen Drehimpulsgeber (22) in Verbindung mit dem Lagekreisregler (27) und der Zustellsteuerung (25) kontrollierbar ist, und dessen Drehzahl mittels eines Tachogenerators (23) regelbar ist.

20. Vorrichtung nach Anspruch 19, dadurch gekennzeichnet, daß ein Eingabeglied (32) zur Vorgabe der Drehmomentbegrenzung des Eilgangs vorgesehen ist.

21. Vorrichtung nach Anspruch 20, dadurch gekennzeichnet, daß ein Eingabeglied (38) zur Vorgabe des Rückstellbetrages zwischen Eilgang und Zerspangang vorgesehen ist.

22. Vorrichtung nach Anspruch 19 oder 20, dadurch gekennzeichnet, daß ein Eingabeglied (39) für die Zustellgeschwindigkeit und ein Eingabeglied (42) für das Zerspanmoment vorgesehen sind.

23. Vorrichtung nach Anspruch 22, dadurch gekennzeichnet, daß weitere Eingabeglieder (43, 44) für die Vorgabe verschiedener Zustellge- schwindigkeiten und Zerspanmomente vorgese- hen sind, wobei vorzugsweise ein Eingabeglied (66) zur Eingabe eines Zwischenmaßes zur Umschaltung der Bearbeitungsparameter und ein Schalter (50) zur manuellen Umschaltung derselben vorgesehen sind.

24. Vorrichtung nach einem der Ansprüche 19 bis 23, dadurch gekennzeichnet, daß ein Eingabeglied (45) zu einer entsprechend der Bearbei- tungszugabe des ersten Werkstückes erforderli- chen Zerspanzustellung vorgesehen ist.

25. Vorrichtung nach einem der Ansprüche 8 bis 24, dadurch gekennzeichnet, daß ein Verschleißwert-Eingabeglied (47) zur automatischen Berücksichtigung des Honsteinverschleisses und ein damit in Verbindung stehender Werkstückzähler (48) vorgesehen sind.

26. Vorrichtung nach einem der Ansprüche 17 bis 25, dadurch gekennzeichnet, daß ein weiteres Eingabeglied (64) zur Eingabe des Zustellübersetzungsverhältnisses des jeweils eingesetzten Werkzeuges vorgesehen ist.

27. Vorrichtung nach einem der Ansprüche 24 bis 26, dadurch gekennzeichnet, daß eine Nachmeßeinrichtung (58) vorgesehen ist, durch die das in der Zustellsteuerung (25) gespeicherte Fertigmaß korrigierbar ist.

28. Vorrichtung nach einem der Ansprüche 24 bis 26, dadurch gekennzeichnet, daß eine pneumatische Meßeinrichtung (53) vorgesehen ist, die über ein mit Meßdüsen (54) ausgestattetes Honwerkzeug (2a) arbeitet und zur Überwachung des Arbeitsprozesses vorgesehen ist.

29. Vorrichtung nach einem der Ansprüche 17 bis 28, dadurch gekennzeichnet, daß eine Fernansteuerung (67) vorgesehen ist, über die alle der Zustellsteuerung (25) zugeordneten Eingabeglieder von der allgemeinen Maschinensteuerung aus übertragbar sind.

**Revendications**

1. Procédé pour l'avance automatique d'un outil de pierrage pour l'usinage d'alésages de pièces, l'avance se faisant tout d'abord en marche rapide suivie d'une commutation sur une vitesse de coupe plus lente, l'avance rapide et l'avance de coupe étant commandées par un moteur (4) commun et la vitesse d'avance étant préréglée pour l'avance rapide et pour l'avance de coupe, caractérisé en ce qu'une limitation de couple du moteur est respectivement préréglée et que la limitation de couple répond vers la fin de l'avance rapide, lors de l'application des pierres abrasives à pierrer contre la paroi de l'alésage, ce qui déclenche la commutation de l'avance rapide sur l'avance de coupe.

2. Procédé selon la revendication 1, caractérisé en ce que, après l'introduction de l'outil de pierrage (2) dans l'alésage (21) de la pièce à usiner, les pierres abrasives à pierrer (19) sont avancées en marche rapide par l'intermédiaire d'éléments d'avance (5, 6, 7, 14, 15) bien connus en soi et que le moteur (4) tourne alors à grande vitesse et avec un faible couple, conformément au préréglage.

3. Procédé selon la revendication 2, caractérisé en ce que, après l'introduction de l'outil de pierrage (2) dans l'alésage (21) de la pièce à usiner, la course est interrompue aussi longtemps que les pierres abrasives à pierrer (19) sont avancées en marche rapide.

4. Procédé selon l'une des revendications 2 ou 3, caractérisé en ce que le moteur (4) est arrêté au moment de l'application des pierres abrasives à pierrer (19) contre la paroi (20) de l'alésage (21) de la pièce à usiner et de l'atteinte de couple limite préréglé.

5. Procédé selon la revendication 4, caractérisé en ce que, après l'application des pierres abrasives à pierrer (19) contre la paroi (20) de l'alésage et après la mise à l'arrêt du moteur (4), le sens de rotation de celui-ci est temporairement inversé et que les pierres abrasives à pierrer (19) sont ramenées en arrière d'une quantité préréglée laquelle est choisie de préférence de telle façon que les pierres abrasives à pierrer (19) se trouvent encore en contact avec la paroi (20) de l'alésage mais que l'ensemble du système d'avance est mécaniquement détendu.

6. Procédé selon la revendication 5, caractérisé en ce que la valeur du rappel est calculée automatiquement en fonction des caractéristiques prédéterminables de l'outil ou introduite préalablement par l'intermédiaire d'un élément d'entrée (38).

7. Procédé selon l'une des revendications 5 ou 6, caractérisé en ce que, après le rappel des pierres abrasives à pierrer (19) effectué à la suite de l'avance rapide, la course, la rotation de l'outil et l'avance de coupe qui, conformément au préréglage, fonctionne de préférence avec une faible vitesse d'avance et un couple limite important, sont mises en marche automatiquement.

8. Procédé selon l'une des revendications 1 à 7, caractérisé en ce que, lors de l'atteinte d'une valeur introduite préalablement, la cote finale, l'avance de coupe est stoppée, que le moteur (4) tourne temporairement en sens inverse et que l'avance est ramenée en arrière d'une quantité préréglée.

9. Procédé selon la revendication 8, caractérisé en ce que sur un élément d'entrée (45) est introduite une avance de coupe nécessaire, conformément à l'excédent pour l'usinage, pour la première d'une pluralité de pièces à usiner en série, que l'avance de coupe est arrêtée dès l'atteinte de cette valeur et que cette position est mémorisée comme "cote finale" dans une commande d'avance (25).

10. Procédé selon la revendication 9, caractérisé en ce qu'une valeur d'usure des pierres abrasives à pierrer déterminée préalablement et rapportée à une pièce usinée est introduite par un élément d'entrée (47) de la commande d'avance (25), et que cette valeur est additionnée à la cote finale et mémorisée comme nouvelle cote finale dans la commande d'avance (25).

11. Procédé selon l'une des revendications 1 à 10, caractérisé en ce que par un élément d'entrée (66) est introduite une valeur intermédiaire située entre la cote avant l'usinage et la cote finale, que lors de l'atteinte de cette valeur, la commande d'avance (25) commute sur une autre vitesse d'avance et/ou sur un autre couple d'usinage, et que, en même temps, la vitesse de translation, la vitesse de rotation de l'outil et les forces de serrage de la pièce à usiner peuvent également être modifiées de manière automatique.

12. Procédé selon l'une des revendications 8 à 11, caractérisé en ce que la valeur de l'alésage (21) de la pièce à usiner mesurée par un dispositif de mesure de contrôle (58) est comparée avec la cote finale désirée de l'alésage (21) de la pièce, et que l'écart est additionné à la cote finale stockée dans la commande d'avance (25) et mémorisée comme "nouvelle" cote finale.

13. Procédé selon l'une des revendications 8 à 12, caractérisé en ce que la cote de l'alésage est déterminée pendant l'usinage à l'aide d'un dispositif de mesure (53), que cette valeur est comparée dans la commande d'avance avec la valeur de la cote finale, et que le processus d'usinage est terminé dès l'atteinte de la cote finale.

14. Procédé selon la revendication 13, caractérisé en ce que la commutation pendant l'avance de coupe sur une autre vitesse d'avance et/ou sur un autre couple d'usinage est commandée par la commande d'avance (25) en fonction des signaux de mesure délivrés par le dispositif de mesure (53).

15. Procédé selon la revendication 14, caractérisé en ce que les éléments d'entrée de la commande d'avance (25) sont actionnés par l'intermédiaire d'une commande à distance automatique (67), et que, par l'intermédiaire de la commande à distance (67), les données d'entrée associées à différents outils sont transmises successivement, conformément à la mise en oeuvre des outils, à la commande d'avance (25).

16. Procédé selon l'une des revendications 1 à 15, caractérisé en ce que la commande est effectuée au moyen d'impulsions, et que pour l'avance de coupe respectivement une seule impulsion est successivement envoyée à un régulateur de circuit d'orientation (27) et traitée de telle façon que le moteur (4) avance à chaque impulsion d'un pas angulaire prédéterminé et fonctionne quasiment en tant que moteur pas à pas.

17. Dispositif pour la mise en oeuvre du procédé selon l'une des revendications 1 à 16, comprenant un dispositif d'avance pour un outil de pierrage pour l'usinage d'alésages de pièces à usiner, avec une avance rapide et une avance de coupe plus lente, pour l'avance rapide et l'avance de coupe étant prévu un moteur (4) commun à l'entrée duquel est monté un dispositif de commande (3) pour les vitesses d'avance, caractérisé en ce qu'il permet, par l'intermédiaire du dispositif de commande (3), de régler respectivement un couple de rotation pour l'avance rapide et pour l'avance de coupe, et que le dispositif de commande (3) comprend une commande d'avance (25) pour la commutation de l'avance rapide sur l'avance de coupe.

18. Dispositif selon la revendication 17, caractérisé en ce que le dispositif de commande (3) comprend également un régulateur de circuit d'orientation (27) et un régulateur de puissance du moteur (29), et que le régulateur de circuit d'orientation (27) est constitué, de préférence, par un convertisseur numérique-analogique qui est inséré entre la commande d'avance (25) et le régulateur de puissance du moteur (29).

19. Dispositif selon la revendication 18, caractérisé en ce que le moteur (4) est un moteur à courant continu dont l'orientation peut être contrôlée par l'intermédiaire d'un générateur de moments angulaires (22), en combinaison avec le régulateur de circuit d'orientation (27) et la commande d'avance (25), et dont la vitesse de rotation peut être réglée au moyen d'une génératrice tachymétrique (23).

20. Dispositif selon la revendication 19, caractérisé en ce qu'un élément d'entrée (32) est prévu pour la prédétermination de la limitation de couple de la marche rapide.

21. Dispositif selon la revendication 20, caractérisé en ce qu'un élément d'entrée (38) est prévu pour la prédétermination de la valeur de rappel entre l'avance rapide et l'avance de coupe.

22. Dispositif selon l'une des revendications 19 ou 20, caractérisé en ce qu'il comprend un élément d'entrée (39) pour la vitesse d'avance et un élément d'entrée (42) pour le couple d'usinage.

23. Dispositif selon la revendication 22, caractérisé en ce qu'il comprend des éléments d'entrée supplémentaires (43, 44) pour la prédétermination de différentes vitesses d'avance et différents couples d'usinage, et qu'il est prévu de préférence un élément d'entrée (66) pour l'introduction d'une cote intermédiaire pour la commutation des paramètres d'usinage, et un commutateur (50) pour la commutation manuelle de ceux-ci.

24. Dispositif selon l'une des revendications 19 à 23, caractérisé en ce qu'il comprend un élément d'entrée (45) pour une avance de coupe nécessaire en fonction de l'excédent pour l'usinage de la première pièce à usiner.

25. Dispositif selon l'une des revendications 8 à 24, caractérisé en ce qu'il comprend un élément d'entrée de valeur d'usure (47) pour la prise en compte automatique de l'usure des pierres abrasives à pierrer, et un compteur de pièces (48) relié audit élément d'entrée.

26. Dispositif selon l'une des revendications 17 à 25, caractérisé en ce qu'il comprend un autre élément d'entrée (64) pour l'introduction du rapport des changements de vitesse d'avance de l'outil respectivement mis en oeuvre.

27. Dispositif selon l'une des revendications 24 à 26, caractérisé' en ce qu'il comprend un dispositif de mesure de contrôle (58) permettant de corriger la cote finale mémorisée dans la commande d'avance (25).

28. Dispositif selon l'une des revendications 24 à 26, caractérisé en ce qu'il comprend un dispositif de mesure pneumatique (53) qui fonctionne par l'intermédiaire d'un outil de pierrage (2a) équipé de tuyères de mesure (54) et est prévu pour surveiller le processus de travail.

29. Dispositif selon l'une des revendications 17 à 28, caractérisé en ce qu'il comprend une commande à distance (67) par l'intermédiaire de laquelle tous les éléments d'entrée associés à la commande d'avance (25) peuvent être transmis à partir de la commande générale de la machine.

## Claims

1. Method for the automatic infeed of a honing tool for machining work-piece bores, first of all the infeed taking place with rapid traverse and then being switched to a slower cutting infeed, the rapid infeed and the cutting infeed being achieved by a common motor (4) and the infeed speed of the rapid infeed and that of the cutting infeed being pre-set, characterised in that a respective torque limitation of the motor is pre-set and towards the end of the rapid infeed, when the honing stones bear against the wall of the bore, the torque limitation responds, whereupon the change from rapid infeed to cutting infeed takes place.

2. Method according to Claim 1, characterised in that after the insertion of the honing tool (2) into the workpiece bore (21), the infeed of the honing stones (19) with rapid traverse takes place by way of infeed members (5, 6, 7, 14, 15) known per se and the motor (4) thus operates at high speed and low torque corresponding to the pre-setting.

3. Method according to Claim 2, characterised in that after the insertion of the honing tool (2) into the workpiece bore (21), the stroke movement is interrupted as long as the infeed with rapid traverse of the honing stones (19) is taking place.

4. Method according to Claim 2 or 3, characterised in that when the honing stones (19) bear against the bore wall (20) of the work-piece bore (21) and on reaching the pre-set limiting torque, the motor (4) is switched off.

5. Method according to Claim 4, characterised in that after the honing stones (19) bear against the bore wall (20) and the motor (4) is switched off, its direction of rotation is changed briefly and the honing stones (19) are moved back by a preset amount, which is preferably selected so that the honing stones (19) still bear against the bore wall (20), but the entire infeed system is mechanically relieved of stress.

6. Method according to Claim 5, characterised in that the amount of the backfeed is calculated automatically depending on the tool characteristics which can be preset or is fed in by way of an input member (38).

7. Method according to one of Claims 5 or 6, characterised in that after the return feed of the honing stones (19), which takes place subsequent to the infeed with rapid traverse, automatically the stroke movement, the tool rotation and the cutting infeed, which operates according to the presetting preferably at low infeed speed and high limiting torque, are started.

8. Method according to one of Claims 1 to 7, characterised in that on reaching a value, which was fed in previously, the finished size, the cutting infeed is stopped and the motor (4) rotates briefly in the opposite direction and the infeed is reversed by a preset amount.

9. Method according to Claim 8, characterised in that at an input member (45), a machining infeed necessary for the machining allowance corresponding to the first of several work-pieces, to be machined in a series, is fed in and that on reaching this value, the cutting infeed is stopped and this position is stored as the "finished size" in an infeed control (25).

10. Method according to Claim 9, characterised in that at an input member (47) of the infeed control (25), a previously ascertained honing stone wear value related to a machined work-piece is fed in and that in the infeed control (25) this value is added to the finished size and is stored as a new finished size.

11. Method according to one of Claims 1 to 10, characterised in that at an input member (66), an intermediate value is fed in, which lies between the unmachined size and the finished size and that on reaching this value, the infeed control (25) switches to another infeed speed and/or to another cutting torque, and that at the same time the stroke speed, speed of rotation of the tool and work-piece clamping forces can be varied automatically.

12. Method according to one of Claims 8 to 11, characterised in that the value of the work-piece bore (21) measured by a remeasuring device (58) is compared with the desired finished size of the work-piece bore (21) and the deviation is added to the finished size stored in the infeed control (25) and is stored as a "new" finished size.

13. Method according to one of Claims 8 to 12, characterised in that the dimension of the bore during machining is ascertained by means of a measuring device (53) and that this value is compared in the infeed control with the value of the finished size and that on reaching the finished size, the machining process is terminated.

14. Method according to Claim 13, characterised in that the change-over during the cutting infeed to another infeed speed and/or to another cutting torque is controlled by the infeed control (25) depending on the measurement signals of the measuring device (53).

15. Method according to Claim 14, characterised in that the input members of the infeed control (25) are actuated by way of an automatic remote control (67) and that by way of the remote control (67), the input data associated with the various tools are transferred in succession into the infeed control (25) according to the arrangement of work of the tools.

16. Method according to one of Claims 1 to 15, characterised in that the control takes place by means of pulses and that for the cutting infeed, successively only one respective pulse is fed into a position circuit controller (27) and is evaluated so that at the time of each pulse, the motor (4) is rotated further by a predetermined angular step and operates virtually as a stepping motor.

17. Apparatus for carrying out the method according to one of Claims 1 to 16, with an infeed device for a honing tool for machining work-piece bores with an infeed with rapid traverse and a slower cutting infeed, a common motor (4) being provided for the rapid and cutting infeed, which motor is preceded by a pre-adjustable control device (3) for the infeed speeds, characterised in that by way of the control device (3), a respective torque for the rapid infeed and cutting infeed can be adjusted and the control device (3) comprises an infeed control (25) for switching from rapid infeed to cutting infeed.

18. Apparatus according to Claim 17, characterised in that the control device (3) also comprises a position circuit controller (27) and a motor output controller (29) and that the position circuit controller (27) is preferably a digital-to-analog converter, which is connected between the infeed control (25) and motor output controller (29).

19. Apparatus according to Claim 18, characterised in that the motor (4) is a d.c. motor, whereof the position can be controlled by way of a rotary pulse transmitter (22) in conjunction with the position circuit controller (27) and the infeed control (25) and the speed of which can be regulated by means of a tachogenerator (23).

20. Apparatus according to Claim 19, characterised in that an input member (32) is provided for specifying the torque limit of the rapid traverse.

21. Apparatus according to Claim 20, characterised in that an input member (38) is provided for specifying the resetting amount between rapid traverse and cutting traverse.

22. Apparatus according to Claim 19 or 20, characterised in that an input member (39) is provided for the infeed speed and an input member (42) is provided for the cutting torque.

23. Apparatus according to Claim 22, characterised in that further input members (43, 44) are provided for specifying various infeed speeds and cutting torques, preferably an input member (66) being provided for feeding in an intermediate dimension for switching-over the machining parameters and a switch (50) being provided for the manual switching thereof.

24. Apparatus according to one of Claims 19 to 23, characterised in that an input member (45) is provided for a necessary cutting infeed according to the machining allowance of the first work-piece.

25. Apparatus according to one of Claims 8 to 24, characterised in that a wear value input member (47) is provided for automatically taking into consideration the wear of the honing stones and a work-piece counter (48) connected thereto is provided.

26. Apparatus according to one of Claims 17 to 25, characterised in that a further input member (64) is provided for feeding in infeed speed ratios of the tool respectively used.

27. Apparatus according to one of Claims 24 to 26, characterised in that a remeasuring device (58) is provided, by which the finished size stored in the infeed control (25) can be corrected.

28. Apparatus according to one of Claims 24 to 26, characterised in that a pneumatic measuring device (53) is provided, which operates by way of a honing tool (2a) equipped with measuring nozzles (54) and is provided for monitoring the machining process.

29. Apparatus according to one of Claims 17 to 28, characterised in that a remote control arrangement (67) is provided, by which all the input members associated with the infeed control (25) can be transferred from the general machine control.

EP 0 163 983 B1

Fig. 1

1

Fig. 2

Fig. 3

Fig. 4

Fig. 5